# FASCICULE DE BREVET EUROPEEN

(11) **EP 0 627 093 B1**
(45) Date de publication et mention de la délivrance du brevet: **14.07.1999**
(21) Numéro de dépôt: 94902841.9
(22) Date de dépôt: 21.12.1993
(51) Int. Cl.: G02B 27/00, G09B 9/08

(54) **PROJECTEUR D'IMAGES MOBILES A FAIBLE CHAMP**
SCHMALPROJEKTOR FÜR EIN BEWEGLISCHES BILD
PROJECTOR FOR LOW FIELD MOVING IMAGES

(30) Priorité: 22.12.1992 FR 9215470
(43) Date de publication de la demande: 07.12.1994
(73) Titulaire: THOMSON-CSF, 75008 Paris (FR)
(72) Inventeur: FRAPIN, Pascal, F-92402 Courbevoie Cédex (FR); LACROIX, Michel, F-92402 Courbevoie Cédex (FR)
(74) Mandataire: Chaverneff, Vladimir
(86) Numéro de dépôt international: FR9301276
(87) Numéro de publication internationale: WO9415237

(56) Documents cités:
- EP-A- 0 372 568
- EP-A- 0 426 497
- EP-A- 0 484 163
- PATENT ABSTRACTS OF JAPAN vol. 16, no. 143 (P-1335)9 Avril 1992 & JP,A,04 001 744 (MATSUSHITA ELECTRIC) 7 Janvier 1992

## Description

La présente invention se rapporte à un projecteur d'images mobiles à faible champ.

Dans les simulateurs tels que les simulateurs de combat aérien, à sphère de projection, on projette sur cette sphère des images à grand champ optique du ciel et du sol, et en surimpression sur ces images, des images de cibles. Les projecteurs d'images de cibles peuvent être disposés de part et d'autre de la cabine de pilotage du simulateur, en-dessous de la zone de visibilité du pilote, ou sur un pylône situé derrière la cabine. Ces projecteurs doivent être le plus compacts possible pour éviter une occultation mutuelle.

Les cibles ainsi visualisées doivent être représentées pour des distances réelles à l'observateur comprises entre 200 et 6000 m environ. Les projecteurs doivent donc être munis d'un zoom optique et électronique à rapport élevé (30 pour l'exemple cité), et les images projetées doivent être très contrastées pour représenter le plus fidèlement possible la réalité.

Les dispositifs de projection connus comportent des cellules à cristaux liquides éclairées en lumière naturelle par des projecteurs à optique complexe, et si l'on désire avoir une bonne résolution des cibles projetées, il faut des cellules de grande taille, et donc des optiques corrélativement de grand diamètre et onéreuses.

On connaît d'après le document EP-A-0 484 163 un dispositif de projection à source ponctuelle et modulateur à cristaux liquides.

La présente invention a pour objet un projecteur d'images mobiles à faible champ optique qui soient bien contrastées et qui mette en oeuvre des moyens optiques le moins onéreux possible.

Le dispositif de projection de l'invention est défini à la revendication 1 et comporte une source lumineuse ponctuelle disposée au foyer d'une optique de collimation suivie d'un dispositif à cellule à cristaux liquides à adressage matriciel, d'une optique de formation de faisceau divergent et, au-delà du foyer de l'optique convergente de formation de faisceau divergent, d'un zoom afocal projetant son faisceau de sortie sur un écran de projection et dont la face d'entrée est disposée à un endroit où le diamètre du faisceau issu de ce foyer est pratiquement égal à celui de cette face d'entrée.

La présente invention sera mieux comprise à la lecture de la description détaillée de plusieurs modes de réalisation, pris à titre d'exemples non limitatifs et illustrés par le dessin annexé, sur lequel :
- la figure 1 est une vue schématique d'un premier mode de réalisation du dispositif de l'invention utilisant une fibre optique ;
- la figure 2 est une vue schématique d'un deuxième mode de réalisation du dispositif de l'invention avec couplage direct de la source lumineuse ; et
- la figure 3 est une vue schématique d'un troisième mode de réalisation du dispositif de l'invention permettant d'obtenir des images en couleurs.

L'invention est décrite ci-dessous en référence à un projecteur de cibles pour simulateur de combat aérien, mais il est bien entendu qu'elle n'est pas limitée à une telle application, et qu'elle peut être mise en oeuvre dans d'autres domaines pour lesquels on a besoin de projeter des images d'objets mobiles à relativement faible champ optique, objets dont la taille peut varier dans de grandes proportions, c'est-à-dire dont l'éloignement simulé par rapport à l'observateur peut varier dans de fortes proportions (dans un rapport de plusieurs dizaines par exemple).

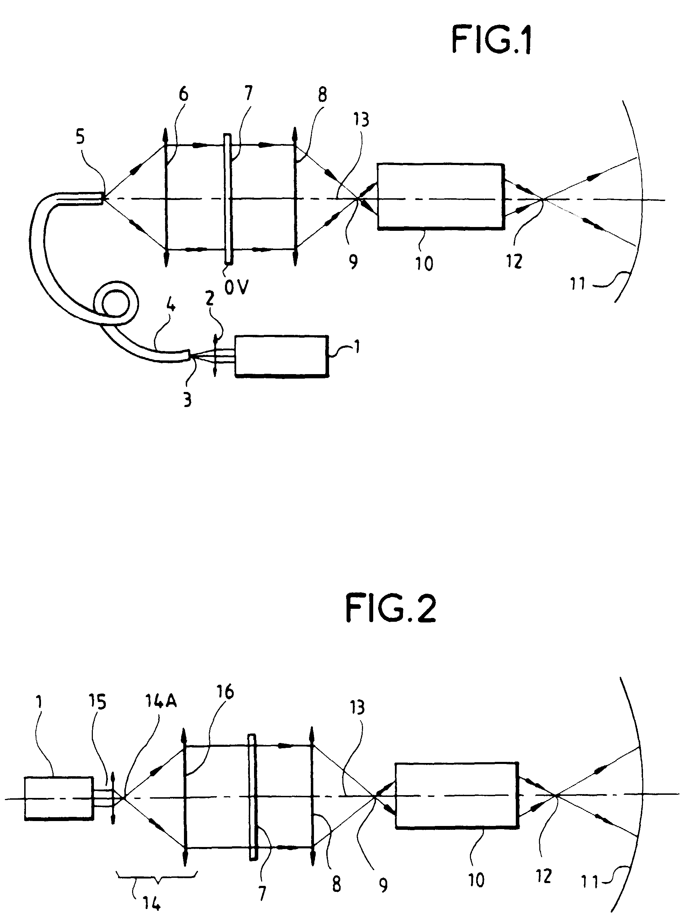

Le dispositif de projection représenté en figure 1 comporte une source lumineuse 1 de forte intensité lumineuse, avantageusement un générateur laser. Dans le cas où l'on utilise un laser, il peut par exemple être multimode monochrome He-Ne, ou multimode blanc Ar-Kr. On place devant le générateur 1 une optique 2 de couplage à l'extrémité 3 d'une fibre optique 4 de transport du rayon lumineux de ce générateur. L'autre extrémité 5 de la fibre 4, que l'on assimile à une source lumineuse ponctuelle, est placée au foyer d'un dispositif optique de collimation 6, qui est une simple lentille convergente dans le cas présent. Le dispositif optique 6 est suivi d'un modulateur de faisceau 7. Dans l'exemple présent, ce modulateur est une cellule à cristaux liquides à adressage matriciel, munie de ses polariseurs habituels. La cellule 7 a des dimensions correspondant sensiblement à celles du faisceau issu de la lentille 6. Sa résolution peut par exemple être comprise entre 250 x 250 pixels et 1000 x 1000 pixels, mais peut aussi bien être meilleure. La cellule 7 reçoit un signal vidéo V produit de façon connue en soi par un générateur vidéo (non représenté). La cellule 7 est suivie d'un dispositif optique 8, similaire au dispositif 6. Un peu au-delà du foyer 9 du dispositif 8, là où le faisceau issu de 8 commence à diverger, on dispose un zoom afocal 10. L'emplacement du zoom 10 est déterminé de façon que sa face d'entrée soit placée là où le diamètre du faisceau issu du foyer 9 est pratiquement égal à celui de cette face d'entrée. Le faisceau de sortie du zoom 10 est projeté sur un écran 11, qui est dans le cas présent l'écran du simulateur de combat aérien. A la sortie du zoom 10, le faisceau lumineux converge au point 12.

Les dispositifs 6, 7, 8 et 10 sont centrés sur un axe optique 13 passant par 5, 9 et 12. Le modulateur 7 module spatialement dans sa section le faisceau collimaté de la lentille 6, ce qui donne aux points 9 et 12 des sources ponctuelles modulées.

Pour le mode de réalisation de la figure 2, les mêmes éléments que ceux de la figure 1 sont affectés des mêmes références numériques. Ce mode de réalisation se rapporte au cas où le générateur laser 1 peut être disposé sur l'axe 13 à proximité de la cellule 7. Dans ce cas, bien entendu, on supprime la fibre optique de la figure 1. Le laser 1 est suivi d'un agrandisseur de faisceau 14 comportant par exemple une petite lentille convergente 15 dont le foyer coïncide avec le foyer d'une lentille 16 similaire à la lentille 6 de la figure 1. Le faisceau laser collimaté par la lentille 16 est traité de la même façon que celui de la lentille 6. Bien entendu, la suppression de la fibre optique 4 augmente le rendement lumineux du dispositif de projection en supprimant les pertes de couplage laser/fibre optique.

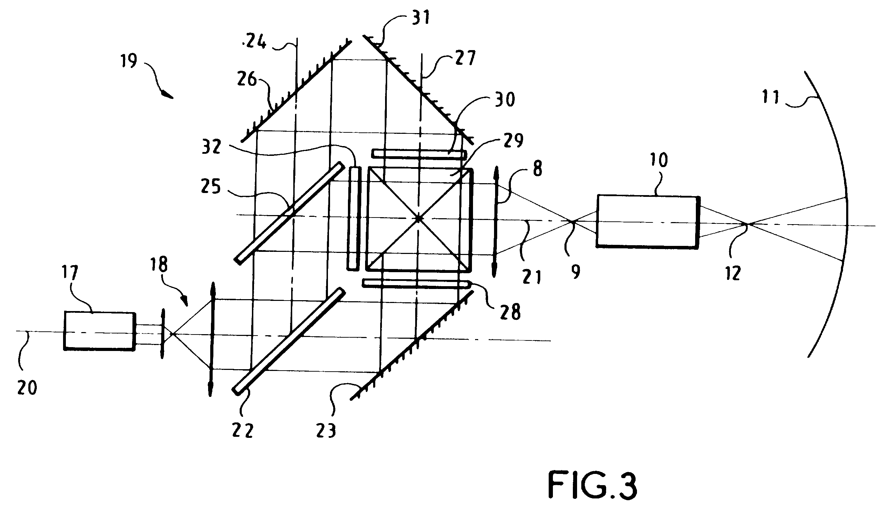

On a représenté en figure 3 un mode de réalisation permettant d'obtenir une image en couleurs. Le laser 17 utilisé est un laser blanc, par exemple à gaz mélangés Ar/Kr. Ce laser 17 est par exemple associé à un agrandisseur de faisceau 18, similaire à l'agrandisseur 14 de la figure 2. Entre l'agrandisseur 18 et la lentille de sortie 8 (coopérant avec le même zoom 10), on intercale un dispositif 19 de séparation de composantes RVB obtenues à partir de la lumière blanche du laser 17. Ce dispositif 19 comporte trois cellules modulant chacune de ces composantes RVB. Etant donné la disposition compacte particulière des éléments du dispositif 19, l'axe optique 20 du laser 17 et de l'agrandisseur 18 est décalé par rapport à l'axe optique 21 commun à la lentille 8 et au zoom 10.

Le dispositif 19 comprend un premier miroir dichroïque semi-transparent 22 disposé à 45° par rapport à l'axe 20 en aval de l'agrandisseur 18. Parallèlement au miroir 22, et en aval de celui-ci, on dispose sur le même axe 20 un miroir réfléchissant 23, dont la face réfléchissante est tournée vers le miroir 22.

Soit un axe optique 24 perpendiculaire à l'axe 20 et passant par le point d'incidence de l'axe 20 sur le miroir 22. On dispose sur cet axe 24, parallèlement au miroir 22, en aval de celui-ci un second miroir dichroïque 25, et un miroir réfléchissant 26 dont la face réfléchissante est tournée vers le miroir 25.

Soit un axe optique 27, perpendiculaire à l'axe 20 et passant par le point d'incidence de l'axe 20 sur le miroir 23. On dispose sur cet axe 27, en aval du miroir 23, dans l'ordre, une première cellule à cristaux liquides 28, un prisme dichroïque 29, une deuxième cellule à cristaux liquides 30 et un miroir réfléchissant 31 dont la face réfléchissante est tournée vers le miroir 23. Les cellules 28 et 30 sont perpendiculaires à l'axe 27, et le miroir 31 est incliné à 45° par rapport à l'axe 27, mais est perpendiculaire aux miroirs 23 et 26. Le prisme 29 a une section droite carrée dont deux des côtés sont perpendiculaires à l'axe 27, et les deux autres parallèles à cet axe. Le prisme 29 est disposé de telle façon que l'axe 21 passe par son centre. Cet axe 21 est perpendiculaire aux axes 24 et 27, et rencontre l'axe 24 à son point d'incidence sur le miroir 25. Une troisième cellule à cristaux liquides 32 est disposée entre le miroir 25 et le prisme 29, perpendiculairement à l'axe 21. Les trois cellules 28, 30 et 32 sont identiques à la cellule 7 précitée et sont munies de polariseurs appropriés (non représentés).

Le faisceau collimaté issu du grandisseur 18 est partiellement transmis et partiellement réfléchi par le miroir 22. Ce miroir est traité de façon que le faisceau transmis (vers le miroir 23) ne comporte que la composante rouge R du faisceau de lumière blanche issu du grandisseur 18, le faisceau réfléchi (vers le miroir 25) contenant les composantes verte V et bleue B. Ce faisceau réfléchi est partiellement transmis par le miroir 25 (vers la cellule 30 après avoir été réfléchi par les miroirs 26 et 31) et partiellement réfléchi (vers la cellule 32). Le miroir 25 est traité de façon à réfléchir la composante V et à transmettre la composante B.

Ainsi, les cellules 28, 30 et 32 reçoivent respectivement les composantes R, B et V, et ne modulent donc chacune que la composante correspondante. Le prisme 29 combine ces trois composantes modulées, et donc le faisceau issu de ce prisme et envoyé vers le zoom 10 est un faisceau trichrome modulé, ce qui permet de projeter sur l'écran 11 des images en couleurs. Bien entendu, les composantes R, V, B ne sont pas nécessairement séparées dans l'ordre indiqué ci-dessus, et par exemple le miroir 22 pourrait transmettre la composante V ou B au lieu de la composante R, et réfléchir les deux autres composantes vers le miroir 25 qui serait traité en conséquence.

La disposition décrite ci-dessus du dispositif 19 est compacte et nécessite peu d'éléments, mais il est bien entendu que cette structure n'est pas la seule possible, et que toute structure permettant de séparer les composantes chromatiques d'un faisceau lumineux non monochrome, de les diriger chacune vers une cellule de modulation, et de mélanger les composantes ainsi modulées peut convenir.

Bien entendu, l'ensemble des éléments optiques depuis la source jusqu'au zoom est avantageusement mobile par rapport à l'écran 11.

## Revendications

1. Dispositif de projection d'images mobiles à faible champ optique, comportant une source lumineuse ponctuelle (5; 14A) disposée au foyer d'une optique de collimation (6; 16; 18) suivie d'un dispositif (7; 19) de modulation spatiale du faisceau collimaté comportant une cellule à cristaux liquides à adressage matriciel, d'une optique convergente (8) de formation de faisceau divergent, et d'une optique de projection située au-delà du foyer (9) de l'optique convergente de formation de faisceau divergent pour projeter le faisceau de sortie sur un écran de projection (11), la face d'entrée de l'optique de projection étant disposée à un endroit où le diamètre du faisceau issu du foyer de l'optique convergente est pratiquement égal à celui de cette face d'entrée, caractérisé en ce que l'optique de projection est un zoom afocal (10).

2. Dispositif selon la revendication 1, caractérisé par le fait que la source lumineuse comporte un laser (1; 17).

3. Dispositif selon la revendication 2, caractérisé par le fait qu'une fibre optique (4) de transport de faisceau est disposée entre le laser (1) et le foyer de l'optique de collimation.

4. Dispositif selon l'une des revendications précédentes pour la projection d'images en couleurs, caractérisé par le fait que le dispositif (19) de modulation spatiale comporte un dispositif (22, 25) séparant les composantes chromatiques d'un faisceau lumineux non monochrome, un dispositif modulateur spatial (28, 30, 32) pour chacune de ces composantes et un dispositif mélangeur (29).

5. Dispositif selon la revendication 4, caractérisé par le fait que le dispositif de séparation de composantes comporte au moins un miroir dichroïque, et que le dispositif mélangeur est un prisme dichroïque.

## Patentansprüche

1. Vorrichtung zur Projektion bewegter Bilder mit einem engen optischen Bildfeld, die eine punktförmige Lichtquelle (5; 14A) im Brennpunkt einer Kollimationsoptik (6; 16; 18) enthält, gefolgt von einer Vorrichtung (7; 19) zur räumlichen Modulation des kollimatierten Lichtstrahls mit einer matrixartig adressierbaren Flüssigkristallzelle, von einer Konvergenzoptik (8) zur Bildung eines divergenten Strahls und von einer Projektionsoptik, die jenseits des Brennpunkts der Konvergenzoptik zur Bildung des divergenten Strahls liegt, um ihren Ausgangsstrahl auf einen Projektionsschirm (11) zu projizieren, wobei die Eingangsseite der Projektionsoptik an einer Stelle liegt, an der der Durchmesser des vom Brennpunkt der Konvergenzoptik kommenden Strahls praktisch dem Durchmesser dieser Eingangsseite gleicht, dadurch gekennzeichnet, daß die Projektionsoptik eine afokale Zoomoptik (10) ist.

2. Vorrichtung nach Anspruch 1, dadurch gekennzeichnet, daß die Lichtquelle einen Laser (1; 17) enthält.

3. Vorrichtung nach Anspruch 2, dadurch gekennzeichnet, daß eine Lichtleitfaser (4) zum Transport des Strahls zwischen dem Laser (1) und dem Brennpunkt der Kollimationsoptik liegt.

4. Vorrichtung nach einem der vorstehenden Ansprüche zur Projektion von farbigen Bildern, dadurch gekennzeichnet, daß die Vorrichtung (19) zur räumlichen Modulation eine Vorrichtung (22, 25), mit der die Farbkomponenten eines nicht monochromen Lichtstrahls getrennt werden, eine räumliche Modulationsvorrichtung (28, 30, 32) für jede dieser Farbkomponenten und eine Mischvorrichtung (29) enthält.

5. Vorrichtung nach Anspruch 4, dadurch gekennzeichnet, daß die Vorrichtung zur Trennung der Farbkomponenten mindestens einen dichroitischen Spiegel enthält und daß die Mischvorrichtung ein dichroitisches Prisma ist.

## Claims

1. Device for projecting narrow optical field moving images, including a point light source (5, 14A) arranged at the focus of a collimating optic (6, 16, 18) followed by a device (7, 19) for spatial modulation of the collimated beam including a matrix-addressed liquid crystal cell, by a convergent optic (8) for divergent beam formation, and by a projection optic situated beyond the focus (9) of the convergent optic for divergent beam formation so as to project its exit beam onto a projection screen (11), the entrance face of the projection optic being arranged at a place where the diameter of the beam from the focus of the convergent optic is almost equal to that of this entrance face, characterized in that the projection optic is an afocal zoom (10).

2. Device according to Claim 1, characterized in that the light source includes a laser (1, 17).

3. Device according to Claim 2, characterized in that a beam-transport optical fibre (4) is arranged between the laser (1) and the focus of the collimating optic.

4. Device according to one of the preceding claims for the projection of colour images, characterized in that the spatial modulation device (19) includes a device (22, 25) separating the chromatic components of a non-monochrome light beam, a spatial modulating device (28, 30, 32) in respect of each of these components and a mixer device (29).

5. Device according to Claim 4, characterized in that the device for separating components includes at least one dichroic mirror, and in that the mixer device is a dichroic prism.
